# EUROPÄISCHE PATENTSCHRIFT

(11) **EP 3 085 644 B1**
(45) Veröffentlichungstag und Bekanntmachung des Hinweises auf die Patenterteilung: **05.12.2018**
(21) Anmeldenummer: 16161215.5
(22) Anmeldetag: 18.03.2016
(51) Int. Cl.: B65G 15/26

(54) **FÖRDERVORRICHTUNG ZUM TRANSPORT VON GÜTERN**
CONVEYOR DEVICE FOR TRANSPORTING GOODS
DISPOSITIF DE CONVOYAGE DE MARCHANDISES

(30) Priorität: 21.04.2015 DE 102015207217
(43) Veröffentlichungstag der Anmeldung: 26.10.2016
(73) Patentinhaber: J. Schmalz GmbH, 72293 Glatten (DE)
(72) Erfinder: MAST, Jonas, 72270 Baiersbronn (DE)
(74) Vertreter: DREISS Patentanwälte PartG mbB

(56) Entgegenhaltungen:
- EP-A1- 2 354 049
- WO-A1-2012/074390
- CN-A- 103 723 476
- JP-A- S58 197 104
- KR-A- 20080 065 757
- US-A- 5 020 659
- US-A- 5 632 371
- US-A1- 2004 089 522

## Beschreibung

Die vorliegende Erfindung betrifft eine Fördervorrichtung zum Transport von Gütern, umfassend einzelne Module, die in ihrer Gesamtheit eine Förderstrecke bilden und jeweils einen zwischen einem Anfangsabschnitt des Moduls und einem Endabschnitt des Moduls umlaufenden Riemen aufweisen.

Aus dem Stand der Technik sind beispielsweise Rollenförderer mit angetriebenen Rollen bekannt, wobei kleine oder flache Güter unerwünscht zwischen die Rollen geraten können. Zudem sind teleskopierbare Förderbänder mit gegeneinander verschiebbaren Abschnitten bekannt, wobei kleine oder flache Güter dazu neigen, in die zwischen den Abschnitten befindlichen Freiräume zu gelangen. KR 2008 0065757 A zeigt eine Fördervorrichtung mit den Merkmalen des Oberbegriffs von Anspruch 1.

Der Erfindung liegt die Aufgabe zugrunde, bei einer Fördervorrichtung eine zuverlässige Förderung, insbesondere auch kleiner Güter, zu ermöglichen.

Die Aufgabe wird durch eine Fördervorrichtung mit den Merkmalen des Anspruchs 1 gelöst. Danach zeichnet sich die Fördervorrichtung dadurch aus, dass die Module derart gegeneinander verschwenkbar aneinander gekoppelt sind, dass die Förderstrecke durch Verschwenken der Module längenverstellbar ist.

Durch die verschwenkbar aneinander gekoppelten Module können Lücken vermieden werden, die sich in Längsrichtung der Förderstrecke erstrecken, wie dies beispielsweise bei teleskopierbaren Förderbändern mit gegeneinander verschiebbaren Abschnitten auftreten kann. Ein unerwünschtes Herunterfallen oder Verklemmen von Fördergut ist dadurch weitestgehend vermieden. Zudem kann durch diese Bauweise bei geringer Bauhöhe ein hohes Ein- und Ausfahrverhältnis erreicht werden, also ein hohes Verhältnis von maximal ausgefahrener Länge bezogen auf die vollständig eingefahrene Länge der Förderstrecke. Durch den modularen Aufbau mit einzelnen Modulen ist eine einfache Anpassbarkeit der Förderstrecke an gegebene Förderaufgaben möglich. Auch Höhenunterschiede können überwunden werden. Die Schwenkachse der schwenkbar aneinander gekoppelten Module erstreckt sich insbesondere orthogonal zur Längserstreckung der einzelnen Module und/oder der Förderstrecke.

In vorteilhafter Weise können innerhalb der Förderstrecke mehrere Module kettenartig entlang der Förderstrecke aneinander gekoppelt angeordnet sein. Durch die kettenartige Kopplung lassen sich die Module platzsparend verschwenken, was zu einem hohen Ein- und Ausfahrverhältnis der Förderstrecke beiträgt. Dabei kann die kettenartige Anordnung derart ausgeführt sein, dass je ein Endabschnitt eines Moduls schwenkbar mit einem Anfangsabschnitt eines anderen, insbesondere eines benachbarten Moduls, gekoppelt ist.

Zweckmäßigerweise können die Module aus einer Ebene der Förderstrecke, insbesondere einer durch die Förderstrecke gebildete Ebene, heraus verschwenkbar sein. Darunter ist insbesondere zu verstehen, dass jeweils benachbarte oder unmittelbar miteinander gekoppelte Module gegeneinander anwinkelbar sind. Dadurch ist im eingefahrenen Zustand eine besonders geringe Länge der Förderstrecke erreichbar.

Der umlaufende Riemen umläuft weiter erfindungsgemäß je eine Umlenkung im Anfangsabschnitt und eine Umlenkung im Endabschnitt. Damit lässt sich in Längsrichtung eine vollständige Abdeckung des Moduls durch den Riemen erreichen. Dabei bildet für sich gesehen jedes Modul ein miniaturisiertes Förderband oder einen miniaturisierten Bandförderer.

Zweckmäßigerweise können die Module, insbesondere Reihen von Modulen oder Modulreihen, mittels Scherenelementen schwenkbar gekoppelt sein. Damit lässt sich mit einfachen konstruktiven Mitteln die Längenveränderbarkeit der Förderstrecke erreichen. Die Scherenelemente können manuell verschwenkbar sein, sodass die Förderstrecke manuell verlängerbar ist. Alternativ hierzu kann ein beispielsweise in Längsrichtung der Förderstrecke wirkender Antrieb zur Längeneinstellung der Förderstrecke vorgesehen sein. Die Gesamtheit der Scherenelemente kann auch als Scherenträger bezeichnet werden.
In vorteilhafter Weise können die Module durch Seitenwangen seitlich geschlossen sein. Damit ist das Modul gegen ein unerwünschtes Einziehen von Fremdgegenständen geschützt. Da die Seitenwangen den umlaufenden Riemen in ihrer Mitte einschließen, können diese zudem ein seitliches Lösen des Riemens vermeiden. Die Seitenwände können mittels Hülsen, die beispielsweise mittels Schraubverbindungen mit den Seitenwangen gekoppelt sind, voneinander beabstandet sein. Um einen reibungsarmen Lauf zu begünstigen, ist der Abstand der Seitenwangen derart bemessen, dass zwischen Riemen und einer Seitenwange jeweils ein Luftspalt verbleibt.

Weiter erfindungsgemäß sind mehrere Module quer zur Längserstreckung der Förderstrecke nebeneinander angeordnet, wobei die Module in Längsrichtung der Förderstrecke versetzt angeordnet sind. Damit lässt sich die Förderstrecke an die Förderanforderungen anpassen. Im Konkreten umfasst die Förderstrecke mindestens vier Module, die versetzt in zwei entlang der Förderstrecke aufeinander folgenden Reihen angeordnet sind.

Zur Herstellung einer Schwenkverbindung zwischen den Modulen können die Module an mindestens einer Seite einen Ends eine buchsenförmige Aufnahme und anderen Ends ein tonnenförmiges, mit der buchsenförmigen Aufnahme korrespondierendes Einsatzelement aufweisen. Somit ist eine konstruktiv einfache Schwenkachse geringen Gewichts zwischen den Modulen geschaffen, wobei durch die Dimensionierung von Aufnahme und Einsatzelement entlang der Schwenkachse zugleich auch eine Beabstandung der Module angepasst werden kann. Zur Ausgestaltung der Umlenkungen können die Module jeweils zwei Umlenkrollen aufweisen, um die der Riemen geführt ist. Damit lässt sich ein reibungsarmer Lauf erzielen. Von Vorteil ist außerdem, wenn die Module jeweils eine zwischen den Umlenkrollen angeordnete Spannrolle aufweisen, mit der der Riemen an jedem Modul gespannt werden kann.

In vorteilhafter Weise können die Umlenkrollen jeweils einen Durchgang aufweisen, durch den eine formschlüssig mit dem Durchgang eingreifende Welle eingesetzt ist. Dadurch können in Längsrichtung der Förderstrecke nebeneinander angeordnete Module antriebsgekoppelt werden, sodass sich die Umlenkrollen und damit weitestgehend auch die Riemen synchron drehen.

Für einen günstigen Antrieb können einige der Module als aktive Module zum Antrieb von in der Förderstrecke nachgelagerten Modulen ausgebildet sein. Dadurch wird Antriebsleistung von angetriebenen Modulen oder einer angetriebenen Modulreihe mittels der aktiven Module auf in der Förderstrecke vor- oder nachgelagerte Module weitergegeben. Dies hat den Vorteil, dass ein Antrieb nur an einem Modul oder einer Modulreihe an beliebiger Stelle der Förderstrecke erforderlich ist. Außerdem können passive Module existieren, die beispielsweise in einer Modulreihe neben aktiven Modulen angeordnet sind und die durch die mit den Umlenkrollen eingreifende Welle angetrieben sind. Im Konkreten kann der Riemen der aktiven Module als Zahnriemen ausgebildet sein und die Umlenkrollen der aktiven Module können Zähne zum Eingriff mit den Zahnriemen aufweisen.

Es kann ein Antriebsmotor vorgesehen sein, der mit einer Reihe Module oder Modulreihe gekoppelt ist. Dabei kann der Antriebsmotor, beispielsweise über einen Antriebsriemen, mit einer der die Umlenkrollen durchdringenden Wellen gekoppelt sein. Sind aktive Module vorhanden, kann der Antrieb an einer beliebigen Stelle der Förderstrecke angeordnet sein.

Alternativ hierzu kann ein Antriebsmotor vorgesehen sein, der jeweils mit sämtlichen Reihen von Modulen oder Modulreihen gekoppelt ist, beispielsweise mit einer entlang der Förderstrecke verlaufender und außerhalb der Förderstrecke liegenden Kette oder einem gleichartigen Kopplungsmittel, beispielsweise einem Riemen.

Im Konkreten kann die Förderstrecke am ersten und am zweiten Ende mittels vorzugsweise verlagerbaren Lagerböcken an einer Konsole oder einem Rahmen gelagert sein. Dies kann insbesondere mittels jeweils einer die jeweils endseitigen Module durchdringenden weiteren Welle oder Lagerwelle erfolgen. Damit kann die Länge der Förderstrecke durch einfaches Verlagern eines oder beider Lagerböcke in der Länge eingestellt werden.

Die Erfindung wird im Folgenden anhand der Figuren näher erläutert. Es zeigen:
- Fig. 1: eine Ausführungsform der erfindungsgemäßen Fördervorrichtung;
- Fig. 2: die Fördervorrichtung aus Fig.1 in einer teilweise ausgefahrenen Stellung (a) und einer teilweise eingefahrenen Stellung (b);
- Fig. 3: in mehreren Ansichten ein Modul der Fördervorrichtung aus Fig. 1; und
- Fig. 4: in mehreren Ansichten ein aktives Modul der Fördervorrichtung aus Fig.1.

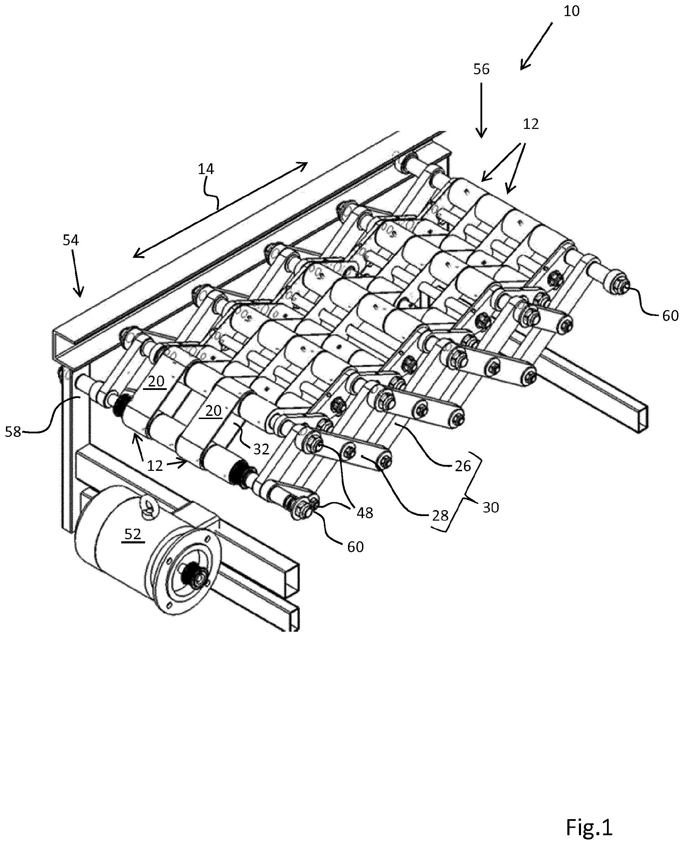

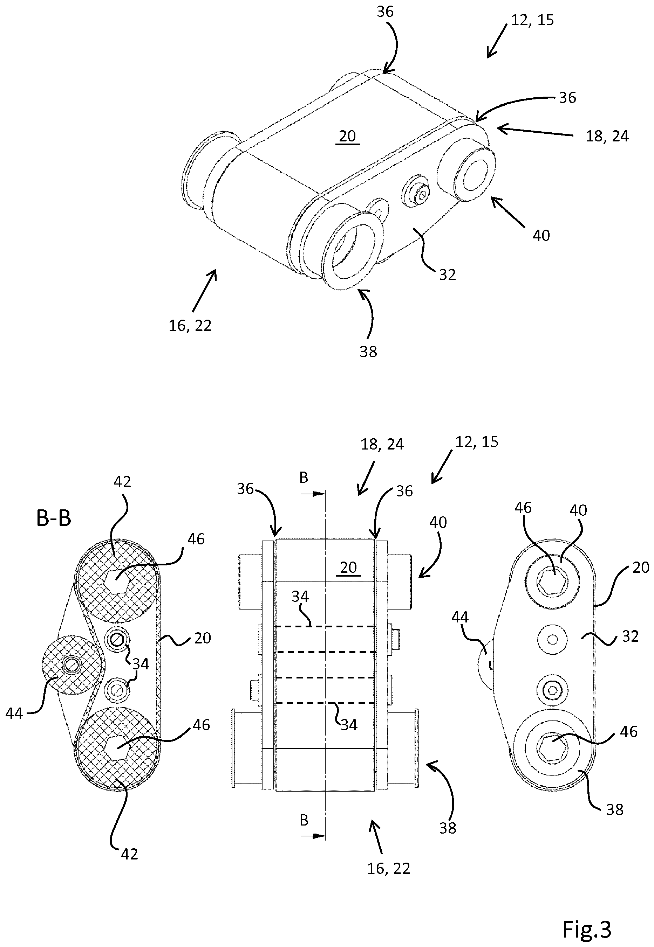

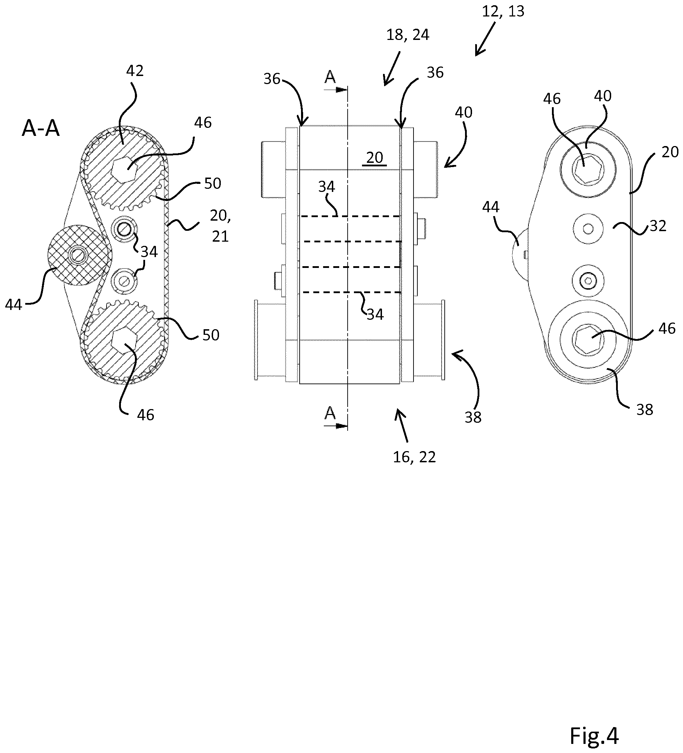

Figur 1 zeigt eine Fördervorrichtung 10 zum Transport von Gütern. Die Fördervorrichtung umfasst einzelne Module 12, die in ihrer Gesamtheit eine Förderstrecke 14 bilden. Die Module 12 weisen jeweils einen zwischen einem Anfangsabschnitt 16 des Moduls 12 und einem Endabschnitt 18 des Moduls 12 umlaufenden Riemen 20 auf (siehe Figur 3 und 4). Die Module 12 sind derart gegeneinander verschwenkbar aneinander gekoppelt, dass die Förderstrecke 14 durch Verschwenken der Module 12 längenverstellbar ist.

Innerhalb der Förderstrecke 14 sind mehrere Module 12 kettenartig entlang der Förderstrecke 14 aneinander gekoppelt angeordnet. Dabei ist in der kettenartigen Anordnung je ein Endabschnitt 18 eines Moduls 12 schwenkbar mit einem Anfangsabschnitt 16 eines anderen, benachbarten Moduls 12 gekoppelt.

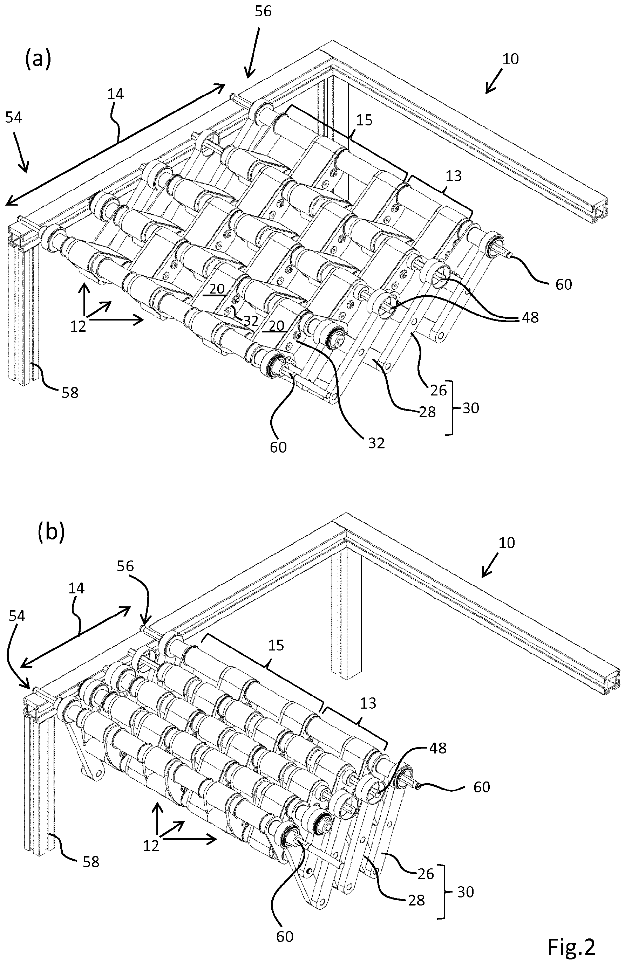

Die Module 12 sind aus einer Ebene der Förderstrecke 14, nämlich einer durch die Förderstrecke 14 gebildeten Ebene heraus verschwenkbar. So sind jeweils benachbart oder unmittelbar miteinander gekoppelte Module 12 gegeneinander anwinkelbar, wie in Figur 2 zu erkennen.

Wie in den Figuren 3 und 4 dargestellt, umläuft der umlaufende Riemen 21 eine Umlenkung 22 im Anfangsabschnitt 16 und eine Umlenkung 24 im Endabschnitt 18.

Die Module 12 sind mittels Scherenelementen 26, 28 schwenkbar gekoppelt. Scherenelemente 26, 28 bilden in ihrer Gesamtheit einen Scherenträger 30. Im dargestellten Ausführungsbeispiel ist der Scherenträger 30 an den äußeren Seite der Förderstrecke 14 angeordnet. Bei nichtdargestellten Ausführungsformen kann der Scherenträger auch innerhalb der Förderstrecke 14 angeordnet sein.

Die Module 12 sind durch Seitenwangen 32 seitlich geschlossen (siehe Figur 3). Durch die Seitenwangen 32 wird zudem verhindert, dass sich lose Materialien in den Riemen 20 wickeln und schlimmstenfalls zu einer Zerstörung führen. Die Seitenwangen 32 sind voneinander beabstandet und beispielsweise mittels Schraubverbindungen fixiert. Dabei ist die Beabstandung der Seitenwangen 32 derart gewählt, dass zwischen Riemen 20 und Seitenwange 32 jeweils ein Luftspalt 36 verbleibt. Die Seitenwangen 32 sind mittels Hülsen 34 voneinander beabstandet.

Quer zur Längserstreckung der Förderstrecke 14 sind mehrere Module 12 nebeneinander angeordnet. Dabei sind die Module versetzt in entlang der Förderstrecke 14 aufeinander folgenden Reihen von Modulen angeordnet.

Wie in den Figuren 3 und 4 zu erkennen, weisen die Module 12 an mindestens einer Seite eines Endes eine buchsenförmige Aufnahme 38 und anderen Endes ein tonnenförmiges, mit der Aufnahme 38 korrespondierendes Einsatzelement 40 auf. Sind mehrere Module aneinander angeordnet, bilden die buchsenförmige Aufnahme 38 und das tonnenförmige Einsatzelement 40 eine Schwenkachse.

Die Module 12 weisen jeweils zwei Umlenkrollen 42 auf, um die der Riemen 20 geführt ist. Außerdem weist jedes Modul 12 eine Spannrolle 44 auf, mit der der Riemen 20 jedes Moduls 12 individuell gespannt werden kann.

Die Umlenkrollen 42 weisen jeweils einen Durchgang 46 auf, durch den eine formschlüssig mit dem Durchgang 46 eingreifende Welle 48 (siehe Figur 2) eingesetzt ist.

Dadurch sind die Umlenkrollen 42 in einer Reihe angeordneten Module 12 miteinander gekoppelt, sodass sich die Umlenkrollen 42 und damit weitestgehend auch die Riemen 20 der in dieser Reihe angeordneten Module 12 synchron drehen.

Einige der Module 12 sind als aktive Module 13 zum Antrieb von in der Förderstrecke nachgelagerten Modulen 12 ausgebildet (siehe Figur 2). Die aktiven Module 13 übertragen eine Antriebsbewegung beziehungsweise Antriebsleistung von einer Reihe von Modulen auf die nächste Reihe. Daneben existieren passive Module 15, die durch in die Umlenkrollen eingebrachten Wellen 48 angetrieben werden.

Wie in Figur 4 dargestellt, ist der Riemen 20 der aktiven Module 13 als Zahnriemen 21 ausgebildet und die Umlenkrollen 42 der aktiven Module 13 weisen Zähne 50 zum Eingriff mit dem Zahnriemen 21 auf.

Zum Antrieb ist ein Antriebsmotor 52 vorgesehen, der mit einem Modul 12, insbesondere mit einer der die Module 12 koppelnden Welle 48 gekoppelt ist (siehe Fig.1). Die Kopplung zwischen Motor und Welle erfolgt durch einen Antriebsriemen (nicht dargestellt).

Die Förderstrecke 14 ist am ersten Ende 54 an einer Konsole 58 gelagert. Am zweiten Ende 56 ist die Förderstrecke mittels eines vorzugsweise verlagerbaren Lagerbocks (nicht dargestellt) an der Konsole oder an dem Rahmen 58 gelagert. Die Lagerung kann jeweils mittels einer die Module durchdringenden weiteren Welle 60 oder Lagerwelle 60 erfolgen. Durch Verlagerung des Lagerbocks am zweiten Ende 56 kann die Länge der Förderstrecke 14 eingestellt werden.

## Patentansprüche

1. Fördervorrichtung (10) zum Transport von Gütern, umfassend einzelne Module (12), die in ihrer Gesamtheit eine Förderstrecke (14) bilden und jeweils einen zwischen einem Anfangsabschnitt (16) des Moduls (12) und einem Endabschnitt (18) des Moduls (12) umlaufenden Riemen (20) aufweisen, wobei die Module (12) derart gegeneinander verschwenkbar aneinander gekoppelt sind, dass die Förderstrecke (14) durch Verschwenken der Module (12) längenverstellbar ist, **dadurch gekennzeichnet, dass** der umlaufende Riemen (20) je eine Umlenkung (22) im Anfangsabschnitt (16) und eine Umlenkung (24) im Endabschnitt (18) umläuft und eine vollständige Abdeckung des jeweiligen Moduls (12) in Längsrichtung derart bildet, dass jedes Modul (12) ein eigenes Förderband bereitstellt,
und dass quer zur Längserstreckung der Förderstrecke (14) mehrere Module (12) nebeneinander und in Längsrichtung der Förderstrecke (14) versetzt zueinander angeordnet sind.

2. Fördervorrichtung (10) nach Anspruch 1, **dadurch gekennzeichnet, dass** innerhalb der Förderstrecke (14) mehrere Module (12) kettenartig entlang der Förderstrecke (14) aneinander gekoppelt angeordnet sind.

3. Fördervorrichtung (10) nach Anspruch 1 oder 2, **dadurch gekennzeichnet, dass** die Module (12) aus einer Ebene der Förderstrecke (14) heraus verschwenkbar sind.

4. Fördervorrichtung (10) nach einem der vorhergehenden Ansprüche, **dadurch gekennzeichnet, dass** die Module (12) mittels Scherenelementen (26, 28) schwenkbar gekoppelt sind.

5. Fördervorrichtung (10) nach einem der vorhergehenden Ansprüche, **dadurch gekennzeichnet, dass** die Module (12) durch Seitenwangen (32) seitlich geschlossen sind.

6. Fördervorrichtung (10) nach einem der vorhergehenden Ansprüche, **dadurch gekennzeichnet, dass** die Module (12) an mindestens einer Seite einends eine buchsenförmige Aufnahme (38) und andernends ein tonnenförmiges, mit der Aufnahme (38) korrespondierendes Einsatzelement (40) aufweisen.

7. Fördervorrichtung (10) nach einem der vorhergehenden Ansprüche, **dadurch gekennzeichnet, dass** die Module (12) jeweils zwei Umlenkrollen (42) aufweisen, um die der Riemen (20) geführt ist.

8. Fördervorrichtung (10) nach Anspruch 7, **dadurch gekennzeichnet, dass** die Umlenkrollen (42) jeweils einen Durchgang (46) aufweisen, durch den eine formschlüssig mit dem Durchgang (46) eingreifende Welle (48) eingesetzt ist.

9. Fördervorrichtung (10) nach einem der vorhergehenden Ansprüche, **dadurch gekennzeichnet, dass** einige der Module (12) als aktive Module (13) zum Antrieb von in der Förderstrecke (14) nachgelagerten Modulen (12, 13) ausgebildet sind.

10. Fördervorrichtung (10) nach Anspruch 9, **dadurch gekennzeichnet, dass** der Riemen (20) der aktiven Module (13) als Zahnriemen (21) ausgebildet ist und dass die Umlenkrollen (42) der aktiven Module (13) Zähne (50) zum Eingriff mit dem Zahnriemen (21) aufweisen.

11. Fördervorrichtung (10) nach einem der vorhergehenden Ansprüche, **dadurch gekennzeichnet, dass** ein Antriebsmotor (52) vorgesehen ist, der mit einer Reihe Module (12) gekoppelt ist.

12. Fördervorrichtung (10) nach einem der vorhergehenden Ansprüche, **dadurch gekennzeichnet, dass** die Förderstrecke (14) am ersten Ende (54) und/oder am zweiten Ende (56) mittels vorzugsweise verlagerbaren Lagerböcken an einer Konsole oder einem Rahmen (58) gelagert ist, insbesondere mittels jeweils einer die Module (12) durchdringenden weiteren Welle (60).

## Claims

1. Conveyor device (10) for transporting goods, comprising individual modules (12) which together form a conveying path (14) and each have a belt (20) circulating between a start portion (16) of the module (12) and an end portion (18) of the module (12), the modules (12) being coupled to one another so as to be pivotable against one another such that the length of the conveying path (14) can be adjusted by pivoting the modules (12), **characterized in that** the circulating belt (20) circulates around a deflection (22) in the start portion (16) and a deflection (24) in the end portion (18) and completely covers the relevant module (12) in the longitudinal direction such that each module (12) provides its own conveyor belt, and **in that** a plurality of modules (12) are arranged next to one another transversely to the longitudinal extent of the conveying path (14) and are offset from one another in the longitudinal direction of the conveying path (14).

2. Conveyor device (10) according to claim 1, **characterized in that** a plurality of modules (12) are arranged inside the conveying path (14) so as to be coupled to one another in the manner of a chain along the conveying path (14) .

3. Conveyor device (10) according to claim 1 or claim 2, **characterized in that** the modules (12) can be pivoted out of a plane of the conveying path (14).

4. Conveyor device (10) according to any of the preceding claims, **characterized in that** the modules (12) are pivotally coupled by means of scissor elements (26, 28).

5. Conveyor device (10) according to any of the preceding claims, **characterized in that** the modules (12) are laterally closed by lateral walls (32).

6. Conveyor device (10) according to any of the preceding claims, **characterized in that** the modules (12) have, on at least one side, a bush-shaped receiving portion (38) at one end and a barrel-shaped insert element (40) corresponding to the receiving portion (38) at the other end.

7. Conveyor device (10) according to any of the preceding claims, **characterized in that** the modules (12) each have two deflection rollers (42) around which the belt (20) is guided.

8. Conveyor device (10) according to claim 7, **characterized in that** the deflection rollers (42) each have a passage (46) through which a shaft (48) that interlockingly engages with the passage (46) is inserted.

9. Conveyor device (10) according to any of the preceding claims, **characterized in that** some of the modules (12) are active modules (13) for the purpose of driving modules (12, 13) mounted downstream in the conveying path (14) .

10. Conveyor device (10) according to claim 9, **characterized in that** the belt (20) of the active modules (13) is a toothed belt (21) and **in that** the deflection rollers (42) of the active modules (13) have teeth (50) for engaging with the toothed belt (21).

11. Conveyor device (10) according to any of the preceding claims, **characterized in that** a drive motor (52) is provided which is coupled to a row of modules (12).

12. Conveyor device (10) according to any of the preceding claims, **characterized in that** the first end (54) and/or the second end (56) of the conveying path (14) is mounted on a bracket or a frame (58) by means of preferably movable bearing blocks, in particular by means of a further shaft (60) that in each case passes through one of the modules (12).

## Revendications

1. Dispositif de transport (10) pour transporter des marchandises, comprenant des modules (12) individuels qui constituent dans leur ensemble un trajet de transport (14) et qui présentent chacun une courroie (20) circulant entre un tronçon initial (16) du module (12) et un tronçon terminal (18) du module (12), les modules (12) étant couplés entre eux de manière à pouvoir pivoter les uns par rapport aux autres de telle sorte que le trajet de transport (14) est réglable en longueur en faisant pivoter les modules (12), **caractérisé par le fait que** ladite courroie (20) circulante passe par respectivement un moyen de renvoi (22) dans le tronçon initial (16) et un moyen de renvoi (24) dans le tronçon terminal (18) et forme une couverture complète du module respectif (12) dans la direction longitudinale de telle sorte que chaque module (12) fournit une propre bande transporteuse, et que plusieurs modules (12) sont disposés les uns à côté des autres transversalement à l'extension longitudinale du trajet de transport (14) et sont décalés les uns par rapport aux autres dans la direction longitudinale du trajet de transport (14).

2. Dispositif de transport (10) selon la revendication 1, **caractérisé par le fait que**, à l'intérieur du trajet de transport (14), plusieurs modules (12) sont disposés de manière à être couplés entre eux à la manière d'une chaîne le long du trajet de transport (14).

3. Dispositif de transport (10) selon la revendication 1 ou 2, **caractérisé par le fait que** l'on peut faire pivoter les modules (12) hors d'un plan du trajet de transport (14) .

4. Dispositif de transport (10) selon l'une quelconque des revendications précédentes, **caractérisé par le fait que** les modules (12) sont couplés de manière pivotante au moyen d'éléments en ciseaux (26, 28).

5. Dispositif de transport (10) selon l'une quelconque des revendications précédentes, **caractérisé par le fait que** les modules (12) sont fermés latéralement par des flasques latérales (32).

6. Dispositif de transport (10) selon l'une quelconque des revendications précédentes, **caractérisé par le fait que** les modules (12) présentent, sur au moins un côté, un logement (38) en forme de douille à une extrémité et un élément d'insertion (40) en forme de tonneau à l'autre extrémité qui correspond audit logement (38).

7. Dispositif de transport (10) selon l'une quelconque des revendications précédentes, **caractérisé par le fait que** les modules (12) présentent chacun deux poulies de renvoi (42) autour desquelles passe la courroie (20).

8. Dispositif de transport (10) selon la revendication 7, **caractérisé par le fait que** les poulies de renvoi (42) présentent chacune un passage (46) à travers lequel est inséré un arbre (48) qui s'engage à engagement positif avec ledit passage (46).

9. Dispositif de transport (10) selon l'une quelconque des revendications précédentes, **caractérisé par le fait que** quelques-uns des modules (12) sont réalisés en tant que modules actifs (13) destinés à entraîner des modules (12, 13) disposés en aval dans le trajet de transport (14).

10. Dispositif de transport (10) selon la revendication 9, **caractérisé par le fait que** la courroie (20) des modules actifs (13) est réalisée en tant que courroie crantée (21) et que les poulies de renvoi (42) des modules actifs (13) présentent des dents (50) destinées à s'engrener avec la courroie crantée (21).

11. Dispositif de transport (10) selon l'une quelconque des revendications précédentes, **caractérisé par le fait qu'**un moteur d'entraînement (52) est prévu qui est couplé à une rangée de modules (12).

12. Dispositif de transport (10) selon l'une quelconque des revendications précédentes, **caractérisé par le fait que** le trajet de transport (14) est logé, à la première extrémité (54) et/ou à la deuxième extrémité (56), sur une console ou un cadre (58) au moyen de supports de préférence déplaçables, en particulier au moyen de respectivement un autre arbre (60) pénétrant les modules (12) .
